# EUROPEAN PATENT APPLICATION

(11) **EP 1 804 051 A1**
(43) Date of publication of application: **04.07.2007**
(21) Application number: 06397029.7
(22) Date of filing: 22.12.2006
(51) Int. Cl.: G01N 21/25, G01N 21/76, G01N 21/64

(54) **Instrumentation and Method for Optical Measurement of Samples**

(30) Priority: 27.12.2005 FI 20051329
(71) Applicant: WALLAC OY, 20101 Turku (FI)
(72) Inventor: Aronkytö, Petri, 21210, Raisio (FI); Harju, Raimo, 20540, Turku (FI); Kuusisto, Ari, 20460, Turku (FI); Kivelä, Petri, 20760, Piispanristi (FI); Väisälä, Mikko, 21500, Piikkiö (FI)
(74) Representative: Kupiainen, Juhani Kalervo

(57) **Abstract**

A device for measuring samples is described which comprises a light source (511) for illuminating a sample, a point detector (531) for measuring radiation from a first measurement volume and for outputting information corresponding to a total radiation intensity received from said first measurement volume, and an image detector (591) comprising a plurality of sensor pixels for measuring radiation from a second measurement volume and for outputting information on intensity and spatial information of radiation intensities received from details such as cells or beads within the second measurement volume. The device may be adapted to perform photometric, chemiluminescence or photoluminescence measurements.

## Description

### Background of the invention

The present invention relates generally to the field of biochemical laboratory instrumentation for different applications of measuring properties of samples on e.g. microtitration plates and corresponding sample supports. More particularly the invention relates to more efficient and more accurate instrumental features of equipment used for measuring e.g. fluorescence.

The routine work and also the research work in analytical biochemical laboratories and in clinical laboratories is often based on different tags or labels coupled on macromolecules under inspection. The typical labels used are different radioactive isotopes, enzymes, different fluorescent molecules and e.g. fluorescent chelates of rare earth metals.

The detection of enzyme labels can be performed by utilizing its natural biochemical function, i.e. to alter the physical properties of molecules. In enzyme immunoassays colourless substances are catalysed by enzymes into colourful substances or non-fluorescent substances are catalysed into fluorescent substances.

The colourful substances are measured with absorption, i.e. photometric measurement. In the photometric measurement the intensity of filtered and stabilized beam is first measured without any sample and then the sample inside one plate is measured. The absorbance i.e. the absorption values are then calculated.

The fluorescent measurement is generally used for measuring quantities of fluorescent label substance in a sample. The most photoluminescence labels are based on molecular photoluminescence process. In this process optical radiation is absorbed by the ground state of a molecule. Due to the absorption of energy the quantum molecule rises into higher excited state. After the fast vibrational relaxation the molecule returns back to its ground state and the excess energy is released as an optical quantum.

A further measurement method is chemiluminescence measurement where emission is due to a chemical reaction, and emission of a substance is measured from a sample without excitation by illumination. Thus a photoluminometer can also be used as a chemiluminometer.

Further, there is an analysing method called Amplified Luminescent Proximity Homogeneous Assay or AlphaScreen™. The function of the AlphaScreen method is based on the use of small beads that attach to the molecules under study. There are two types of beads that are coated with a material acting either as a donor or acceptor of singlet-state oxygen. The measurement starts, when the liquid sample is activated by illuminating by light with a wavelength of 680 nm. After this the material in the donor bead converts ambient oxygen into singlet-state oxygen. The single-state molecules have a short lifetime and they can reach only about a 200 nm distance by diffusion in the liquid. If the chemical reaction in question has taken place, both the donor and acceptor beads are bound to the same molecule and so they are close to each other. In this case the singlet-state oxygen may reach the acceptor bead where a series of reactions is started. As the last phase of the reaction the coating material of the acceptor beads emits photons in the 500-700 nm range. If the chemical reaction has not taken place the singlet-state oxygen cannot reach the acceptor bead and the emission light is not detected. By measuring the intensity of light it is possible to conclude the efficiency of the chemical reaction.

The typical instruments in analytical chemical research laboratories are the different spectroscopic instruments. Many of them are utilizing optical region of electromagnetic spectrum. The two common types of instruments are the spectrophotometers and the spectrofluorometers. These instruments comprise usually one or two wavelength dispersion devices, such as monochromators. The dispersion devices make them capable to perform photometric, photoluminescence and chemiluminescense measurements throughout the optical spectrum.

Patent documents US6187267 and US6097025 describe a device for detecting photoluminescence and chemiluminescence from samples. Figure 1 illustrates a prior art optical analyser according to these documents, especially the main optical components and the different optical paths. The instrument may have several illumination sources in the excitation source unit 103. It may include e.g. a continuous wave lamp (cw-lamp) and a pulse lamp. The radiation from the excitation source unit 103 is guided to a top measurement head 112a or to a bottom measurement head 112b via fibre optic cables 134a or 134b respectively.

The optics of the measurement head guides the excitation pulse to the sample 126.

The emission unit 145 receives photoluminescence emission radiation via fibre optic cable 110a or 110b either from the top measurement head 112a or from the bottom measurement head 112b, respectively. The emission beam is directed to the tips of the thin fibre optic cables with a confocal optical relay structure. The emission unit may comprise optical components, such as lenses, filters and detectors.

The instrument also comprises chemiluminescense measurement equipment. It includes a non-confocal optical relay structure 150, which guides the emission radiation to the thin fibre optic cable 156 by reflections and refraction. The emission radiation is guided via the fibre optic cable to the emission unit including a detector for measuring amount of radiation.

The measurement results achieved with prior art instruments are accurate when the sample to be measured is homogeneous. This means that the substance which is measured and which gives the emission is evenly distributed within the sample. This is the case for example when the substance is dissolved within a liquid sample. However, one important application for optical measurements relates to the measurement of biologic cells, i.e. measurement of substances which are inside the cells or attached to the cells. Usual measurements of cells include e.g. measuring concentrations of Ca²⁺ and GFP (Green Fluorescent Protein). The cells are typically within a liquid sample, and the cells are settled at the bottom of the sample well. In optical measurement of cells the emission is thus received from the bottom area of the sample within a sample well. In addition to biologic cells, measurements of other details within samples, such as various particles or beads is often necessary. The size of such details is typically 1-100 µm.

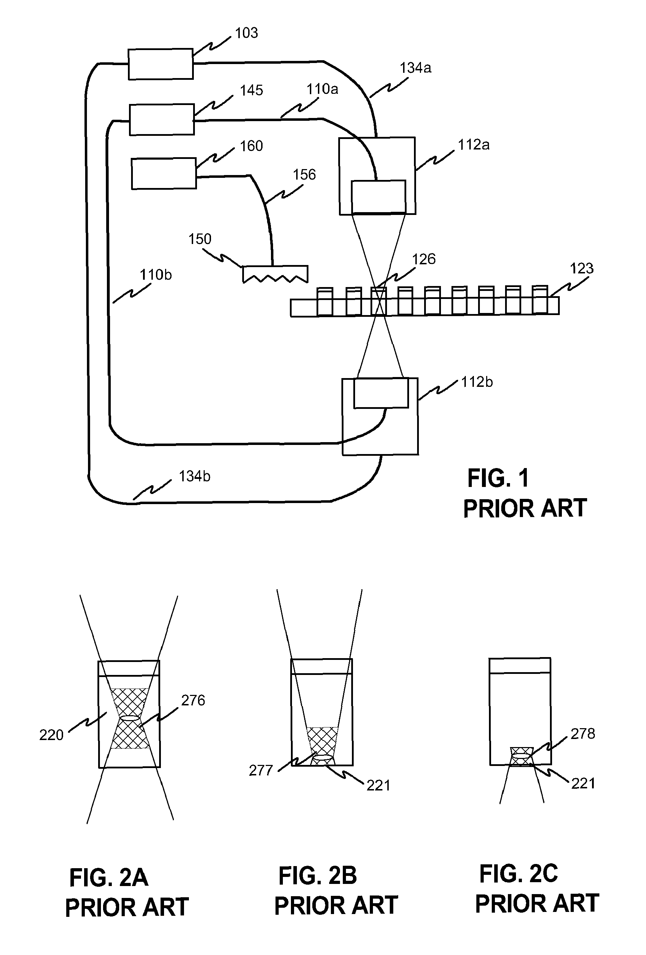

Figures 2a, 2b and 2c illustrate the measurement volume in confocal measurements of a sample. Figure 2a shows a typical measurement volume 276 when a homogeneous liquid sample 220 is measured with a top measurement head or a bottom measurement head. Figure 2b shows a typical measurement volume 277 when cells or other particles 221, located at the bottom of the sample well, are measured with a top measurement head. Figure 2c further shows a typical measurement volume 278 when cells or other particles 221, located at the bottom of the sample well, are measured with a bottom measurement head.

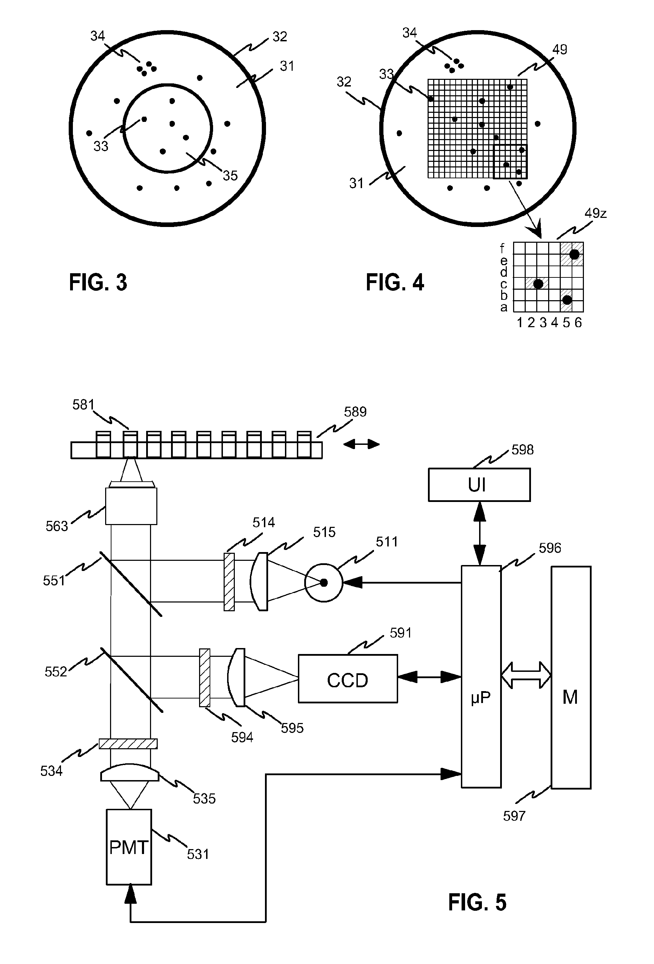

There are certain limitations related to the prior art instrumentation when emission from small details within a sample is measured. Figure 3 illustrates a top or bottom view of a sample 31 within a sample well 32. The sample 31 includes emitting details such as cells 33, 34. The measurement volume of the detector is marked 35. Since the substance to be measured is inside or attached to the cells, the emission is received from a very small volume compared to the total measurement volume.

Let us consider a typical measurement where the measurement volume is 50 mm³, the number of cells within the sample is 10000 and the diameter of each cell is 10 µm. The total volume of the cells would be approx. 0,005 mm³ which is only 100 ppm of the whole measured volume within the sample. Therefore the intensity of the emission signal tends to be very low in such measurements. And further, noise signal is received also from a large sample volume outside the cells, which tends to make the signal-to-noise ratio of the measurement low.

Further, since the prior art measurement gives a value for the intensity of the total emission from the sample, the signal intensity depends on the number of cells within the sample. However, it is usually necessary to get information on the concentration of the measured substance within the details such as cells. In order to get this information the number of cells within the measurement volume should be known and constant, which is usually not possible to achieve. Even if the number of details, such as cells, would be approximately same in each sample, the varying location of the cells within the sample would cause the amount of cells inside the measurement volume to vary as well. For example, the measurement result in Figure 3 would change substantially, if the group of cells 34 would be located inside the measurement volume instead of its location in Figure 3.

### Summary of the invention

An object of the present invention is to provide an optical instrument for laboratory measurements, wherein the described disadvantages of the prior art are avoided or reduced. The object of the invention is therefore to achieve a measurement instrument with improved versatility, accuracy and/or efficiency for performing measurements from both homogeneous samples and samples including details, such as cells.

The object of the invention is achieved by providing optical measurement instrumentation which comprises a point detector for the measurement of homogeneous samples, and an image detector for the measurement samples wherein the substance to be measured is inside or attached to details. The instrumentation has thus two measurement modes for the measurement of different types of samples.

The present invention has substantial advantages over prior art solutions. When the emission radiation is imaged using a sufficient resolution the details such as cells or beads can be distinguished from the background with a much higher signal-to-noise ratio. The measurement can be made based on only those areas of the image which include emitting details, and an average measurement result can be calculated for a detail or a pixel including emission. Therefore the number of the details or their location does not affect the measurement result.

It is also possible to use instrumentation according to the invention for simultaneous measurement of fluorescence both from details such as cells or particles, and from the sample liquid. It is further possible to use the location information of the emitting details within the sample for other purposes thus making multiparameter measurements possible.

In a preferable embodiment of the instrumentation a photomultiplier tube, PMT, is used as a point detector for measuring a measurement volume of a sample as a whole and a CCD is used as an image detector for measuring details from the sample. These detectors have the best sensitivity in different area of the spectrum; PMT is more sensitive blue side of the spectrum compared to the CCD, and the CCD is more sensitive on the red side of the spectrum compared to the PMT. When such detectors are used it is thus possible to have a good coverage of the whole spectrum of the emission radiation.

An optical measurement instrument according to the present invention for measuring samples, comprising
- an illumination source for excitation or activation of a sample,
- a point detector for measuring emission radiation in a first measurement mode, wherein the point detector outputs a signal corresponding to the radiation received within the whole sensor area of the point detector, and
- means for projecting emission radiation from a first measurement volume of a sample to the point detector,
wherein the point detector outputs a signal which corresponds to intensity of the emission radiation received from the whole first measurement volume,
is characterized in that the instrument further comprises
- an image detector for measuring emission radiation in a second measurement mode, wherein a sensor area of the image detector includes a multitude of sensor pixels for providing signals which correspond to the radiation received by said sensor pixels, and
- means for projecting emission radiation from a second measurement volume of a sample to the sensor area of the image detector,
wherein the image detector outputs a signal including information on intensity and spatial distribution of the emission radiation received from details within the second measurement volume of a sample.

A method according to the invention for optical measurement of samples with an optical measurement instrument, the method comprising a selectable first measurement mode, wherein
- emission radiation is projected from a first measurement volume of a sample to a point detector of the instrument, and
- emission radiation is measured with a point detector of the instrument, wherein the point detector outputs a signal corresponding to the radiation received within the whole sensor area of the point detector,
wherein the point detector outputs a signal which corresponds to intensity of the emission radiation received from the whole first measurement volume,
is characterized in that the method further comprises a selectable second measurement mode, wherein
- emission radiation is projected from a second measurement volume of a sample to the sensor area of an image detector,
- emission radiation is measured with the image detector, wherein a multitude of sensor pixels of the image detector provide signals which correspond to the radiation received by said sensor pixels, and
wherein the image detector outputs a signal including information on intensity and spatial distribution of the emission radiation received from details within the second measurement volume of a sample.

Some preferred embodiments are described in the dependent claims.

In this patent application term "point detector" means a detector providing a signal, which substantially corresponds to the total radiation intensity received by the sensor area of the detector from a measurement volume.

In this patent application term "image detector" means a detector including several sensor pixels for providing a signal which includes information on the intensity of radiation received by the sensor pixels, including information on the spatial distribution of the received radiation between the pixels.

In this patent application term emitting "details" of a sample means cells, particles, beads etc. which are not homogeneously distributed within the sample and which include or attach emitting substance, the emission radiation of which is measured.

In this patent application term "measurement volume" means a volume within a sample from which the detector is adapted to receive radiation in the concerned measurement.

In this patent application "measuring" a substance or a sample may mean measuring the contents of a substance in a sample or measuring properties of a sample or properties of a substance in a sample.

### Brief description of the drawings

The described and other advantages of the invention will become apparent from the following detailed description and by referring to the drawings where:
- Fig. 1: is a schematic block diagram of a prior art optical unit of a measurement instrument,
- Fig. 2a: illustrates the measurement volume in a prior art instrument when a homogeneous sample is measured from above or below the sample,
- Fig. 2b: illustrates the measurement volume in a prior art instrument when a sample including cells is measured from above the sample,
- Fig. 2c: illustrates the measurement volume in a prior art instrument when a sample including cells is measured from below the sample,
- Fig. 3: illustrates an enlarged top or bottom view of the measurement volume in a prior art instrument when the sample includes cells,
- Fig. 4: illustrates an enlarged top or bottom view of the imaging volume in an exemplary instrument according to the invention when the sample includes cells,
- Fig. 5: is a schematic illustration of optical paths and main components of an exemplary optical unit for a measurement instrument according to the invention,
- Fig. 6: is a schematic block diagram of an exemplary measurement instrument according to the invention where several measurement modes are available,
- Fig. 7: is a flow diagram illustrating an exemplary method for performing optical measurements according to the invention.
- Fig. 8: illustrates a flow diagram of an exemplary method for determining concentration of emitting substance within details of a sample,
- Fig. 9: shows an exemplary image of measurement from cells wherein an instrument according to the present invention has been used.

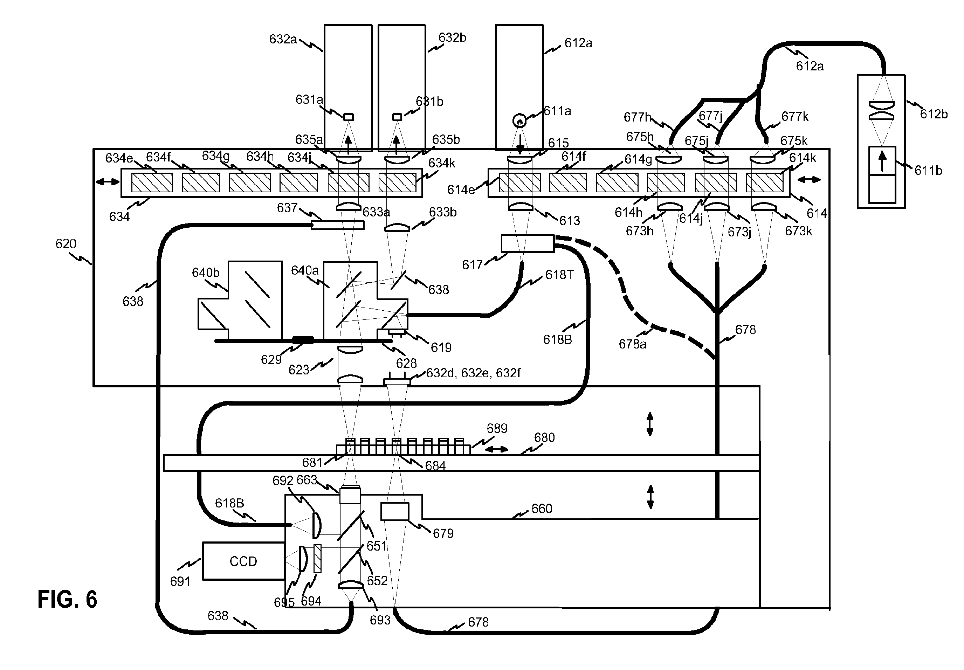

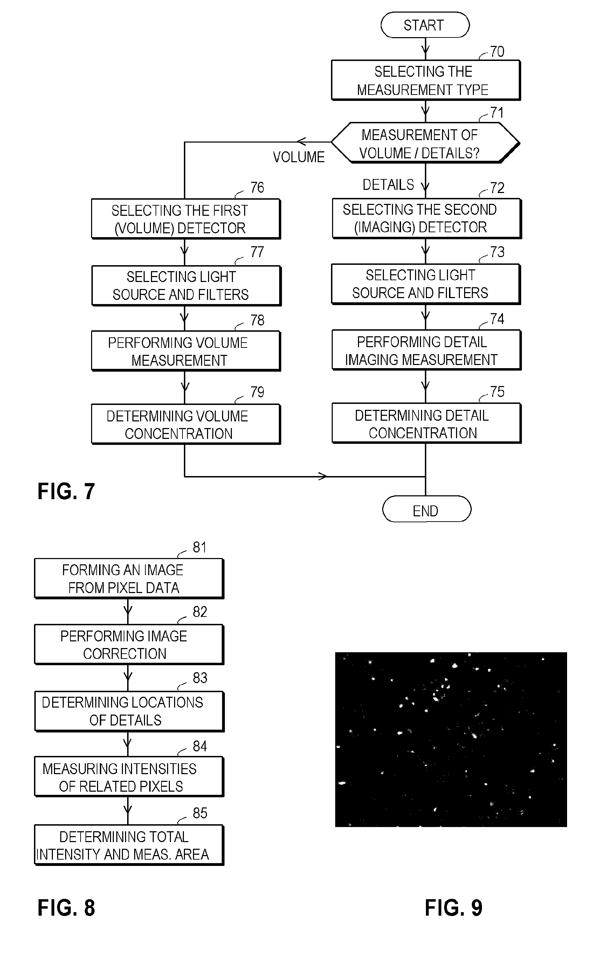

Figures 1-3 were already explained in the description of the prior art. In the following, the principle of the invention is first described referring to Figures 4 and 5. Then, an example of a more detailed implementation is described referring to Figure 6, which illustrates exemplary analyser equipment according to the invention, wherein the equipment has multiple measurement modes available. Finally, an exemplary method according to the invention is described referring to Figures 7-9.

Figure 4 illustrates an exemplary top or bottom view of a sample in an instrument according to the invention. The sample 31 within a sample well 32 includes emitting details such as cells 33. The image of the measurement volume is projected to the sensor surface of an imaging sensor, such as a Charge Coupled Device (CCD). The imaging volume 49 is thus divided into imaging areas of each pixel as shown in Figure 4. The CCD comprises in this case 18x18 pixels.

Figure 4 also shows 6x6 pixels enlarged, 49z. In the following, the enlarged pixels are denoted according their location within the horizontal (1..6) and vertical (a...f) axis. The enlarged part of the imaging volume includes three emitting details, such as cells. One detail emits radiation within pixels c2 and c3, a second detail emits radiation within pixels a5 and a6, and the third detail emits radiation within pixels e5, e6, f5 and f6. In order to measure the emission signal from all the details within the enlarged part of the imaging volume, it is thus sufficient to measure the signal from 8 pixels. The signal from the remaining 28 pixels can be disregarded, and the noise included within these 28 pixels does therefore not reduce the signal-to-noise value of the measurement. With such selective imaging measurement of the sample it is thus possible to increase the accuracy of the measurement significantly.

The measurement principle according to the Figure 4 is not either sensitive to the location of the emitting details. For example, whether the group of details 34 would locate inside or outside the measurement volume would only affect the total signal intensity received from the sample. However, when the average signal intensity is determined for pixels including emission from the located details, this average value would not be significantly affected by the location of the group of details 34, being inside or outside the measurement volume.

By using an imaging detector for imaging details thus improves the measurement accuracy when the number of the details in the imaging volume is small and the emission from the details only covers a part of the image on the sensor surface of the detector. The accuracy can also be improved by increasing the number of pixels in the detector. The number of pixels in the imaging detector can be e.g. as high as 1000x1000 pixels. In order to achieve improvement on the measurement accuracy, the number of pixels should be higher than the number of details within the measurement volume, preferably more than ten-fold or more preferably more than 100-fold higher.

Figure 5 illustrates main components and optical paths of an exemplary optical analyser instrument according to the invention. This versatile instrument comprises means for performing accurate measurement both from homogeneous assay material and assays including details such as cells or other particles. Next parts for providing a volume measurement from samples are described, and then parts for providing measurement of details.

The instrument comprises an illumination source 511 for the excitation of a sample in a photoluminescence measurement. The radiation from the lamp 511 is collimated with lens 515 and directed through an interference filter 514. Different filters can preferably be selected for different wavelengths. The excitation beam is reflected by a dichroic mirror 551 and further directed into the sample 581 through a lens system 563. In order to achieve a good accuracy of the intensity of the excitation beam it is also possible to use a reference detector (not shown in Figure 5) for measuring the intensity of the excitation beam and for providing feedback for controlling the illumination source.

The photoluminescence emission beam from the sample 581 is directed with the objective lens system 563 through mirrors 551 and 552. The dichroic mirror 551 can be designed for certain labels so that it reflects the excitation wavelength but transmits emission wavelength. Also, The dichroic mirror 552 can be designed for certain labels so that it transmits the wavelength of an emission beam received from a measurement from a homogeneous part of a sample, and reflects the wavelength of an excitation beam received from a sample detail measurement. The mirror may alternatively be an ordinary beam splitter mirror, which reflects 50 % of the beam intensity, and transmits 50 % of the beam intensity. The mirror may also be based on polarization etc. A beam splitter mirror can be produced e.g. by forming reflective coating for the mirror to be e.g. stripes or dots, which cover only a part of the mirror surface.

The emission beam further transmits an emission filter 534, and the beam is focused with a lens 535 into a point detector 531. The point detector measures a value for the total intensity received from the measurement volume of the sample. The point detector 531 is most preferably a photon multiplier tube (PMT), but alternatively other types of point detectors can also be used, such as a photo diode detector. The radiation reaches the window of the photo-multiplier tube, and after penetrating through the window the radiation reaches the active surface of the photo-multiplier tube. The block 531 includes the amplifier and other related electronics for the photo-multiplier tube. The amplified signal is preferably integrated over the reception time window, and the achieved signal is converted into a digital signal. The digital signal is led to the microprocessor controller 596, which determines the measurement result on the basis of the signal received from the PMT. This measurement result corresponds to the amount of the measured substance within the measurement volume. The measurement result is preferably stored in the memory 597 and displayed on the user interface 598. The measurement volume may correspond to Figure 2a in this measurement.

When imaging details from a sample the excitation can be performed in the arrangement of Figure 5 with a same illumination source 511 as the volume measurement. However, also different illumination source can be used, especially if the measurement volumes are different in the volume measurement and in measuring details, and if the two modes of measurement are simultaneous.

The excitation filter 514 is selected according to the excitation wavelength of the substance to be measured. The excitation beam is reflected by a mirror 551 and further directed into the sample 581 through the lens system 563. The measurement volume may correspond to Figure 2c in this measurement.

The emission beam received from the details of a sample is also collimated with an objective lens 563. The emission beam further transmits the first dichroic mirror 551, which is designed to transmit radiation of emission wavelength and to reflect radiation of excitation wavelength. The purpose of the filter 594 is to prevent passing of light with a wavelength outside the emission radiation received from the sample details. The second dichroic mirror 552 is on the other hand designed to reflect the radiation of the emission wavelength which is received from the details of the sample. The mirror 552 transmits radiation on wavelength of the emission which is received when measuring the homogeneous volume of the sample. However, other than dichroic beam splitter mirrors can alternatively be used; radiation of unwanted wave lengths can be blocked by separate filters.

The emission beam reflected by the mirror 552 further transmits the filter 594, and the lens 595 focuses the emission beam to the sensor surface of a CCD detector 591. The CCD detector unit 591 advantageously comprises an amplifier and an analog-to-digital converter for providing digital data corresponding to the radiation intensity received by each pixel. The data is led to the microprocessor 596 which processes the data according to the program and parameters stored in the memory 597. The processor may perform image correction and determines locations of the emitting details within the sample measurement volume. The processor further calculates the average concentration of the measured substance within the details, such as cells or other particles. The result of the measurement can be stored in the memory 597 and displayed at the user interface 598.

The instrument of Figure 5 is equipped with an illumination source and related components for providing excitation/activation of a sample, but the instrument is naturally also suitable for measurements which do not require excitation with light, such as chemiluminescence measurement.

The selection of the measurement type and measurement mode can be made using the user interface 598, which may comprise e.g. a keyboard and a display. The measurement sequence is controlled by the controller 596 according to the program and parameters which are stored in a memory 597. The controller thus controls the illumination source, the selection of filters and mirrors, as well as the acquisition of the measurement data from the detectors.

Figure 5 shows the measurements from below the sample, but the volume or detail measurements can alternatively be made from above the sample. It is also possible to use excitation from above the sample and receiving the emission from below the sample, or vice versa.

The measurement volume within a sample is preferably different in location and possibly in size when homogeneous substance and substance from details is measured. The centre of the measurement volume is preferably located near to the centre of the sample when homogeneous substance is measured. When substance from details is measured from the bottom of the sample well, the centre on the measurement volume is preferably at the lower part, possibly near to the bottom of the sample.

It is possible to measure details of each sample separately with the image detector. However, it is alternatively possible to make the measurement of details from two or large number of adjacent samples simultaneously with the image detector. In this case, it is required to design the optical components for a wider optical beam, and to use an image detector with higher resolution.

Figure 6 illustrates in more detail an exemplary optical instrument according to the invention. Especially, mechanical structure of the instrument and means for providing alternative measurement modes are illustrated in more detail.

The instrument of Figure 6 has a top measurement head 620, which includes components for providing an excitation beam and for detecting emissions from above the sample. The instrument has also a bottom measurement head 660, which includes components for providing an excitation beam and for detecting emissions from below the sample. The point and image detectors according to the present invention can be included in the top and/or bottom measurement head. The instrument further comprises a sample platform 680, which has means for moving a sample tray 689 in order to position successive samples 681 into the measurement locations. There may also be means provided for adjusting the vertical position of the sample platform relative to the top and bottom measurement heads.

The instrument according to Figure 6 has an illumination source 612a for providing excitation in photoluminescence measurements. The illumination source 612a includes a pulse lamp, and the optical energy of each pulse is preferably equal. The excitation beam generated by the pulse lamp is collimated with a lens 615 and directed through an interference filter 614. The filter is placed on a filter slide, so that the excitation filter to be used in a measurement can be selected from several filters. The excitation beam is then focused to an end of a fibre optic guide 618, which mixes the excitation beam and guides it to an aperture of an optical module 640a. The optical module 640a and the lens system 623 directs the excitation beam into the sample 681.

An optical fibre 618T is used for guiding the excitation beam from the optical switch 617 to the optical module 640 of the top measurement head. An optical fibre 618B is used for guiding the excitation beam from the optical switch 617 to the optical module 650 of the bottom measurement head. The instrument may also have separate lamps for providing the excitation beam of the top head and the bottom head. For example, separate illumination sources may be used for the measurement of homogeneous substance from a first measurement volume, and for the measurement from details within a second measurement volume of a sample.

In the bottom measurement head the excitation beam is directed into the sample 681 via a collimating lens 692, mirror 651, and a lens system 663 of the bottom measurement head.

The equipment may also include a further pulse lamp 612b, 611 b, which may be a low power lamp, e.g. for photometric measurements. The instrument has an optical fibre guide 612a for guiding the light from the second lamp. The light can be distributed for the photometric measurement into three filters 614h, 614j and 614k with fibre branches 677h, 677j and 677k. After filtering, the beams are collimated into ends of three optical fibre cables 678, which are led to the bottom measurement head for the photometric measurement. The light beams from the optical cables 678 are focused to three samples 684 with a lens system 679 including lenses for each three beams. After transmitting through the samples the beams are measured with three detectors 622d, 622e and 622f, which are e.g. photo diodes. The three ends of the fibre optic cables, three lenses, three simultaneously measured samples and three detectors are in this case located in a row perpendicular to the plane of the drawing and thus only one of them can be seen in the drawing.

It is also possible to use an instrument with same pulse lamp for photometric and photoluminescence measurements. For example, an optical switch 617 may have an output for an optical fibre 678a, which leads light from the lamp 612a to the photometric measurement optics 679. It is then possible to control the optical switch either to guide the light for providing excitation for an emission measurement or to guide the light the photometric measurement.

When the emission from a homogeneous substance is measured from above the sample, the emission beam from the sample 681 is directed with the lens system 623 into the optical module 640a. If emissions from two homogeneous substances are measured, the emission beam is divided into to two beams. A dichroic mirror in the optical module preferably functions as a filter so that a beam with a wavelength of a first emission is transmitted through a selectable filter 634 to the first point detector 631 a, and a beam with a wavelength of a second emission is reflected by mirror 638 and directed through a selectable filter 634 to the second point detector 631 b. The point detector can be e.g. a photo-multiplier tube, which may be used in analogue mode or in photon count mode, or in both modes simultaneously. When the equipment includes two point detectors they may be of different types and the detection modes may be different during a photoluminescence measurement.

The instrument also comprises an optical switch 637 for selecting the detected emission beam for a point detector from the top or bottom measurement head. An optical fibre 638 is used for guiding the first emission beam from the bottom measurement head 660 to the optical switch 637. When emission of a homogeneous substance is measured with a point detector from below the sample, the emission beam is first collimated with objective lens system 663. The emission beam then transmits the dichroic mirrors 651 and 652 as was shown in Figure 5. The emission beam is focused into the end of the optical fibre 638 with a lens 693.

The signals received from the point detectors are amplified and processed to achieve a value for the intensities of the homogeneous emissions. Measurement signals are amplified and read after each excitation pulse and possible signal corrections are calculated. Basic reference parameters are determined with standard solvents after the analyzer has been assembled. If there are more than one excitation pulses used for one sample well, the corresponding emission signals are preferably digitally integrated.

In a second measurement mode for measuring details an image detector 691 is used. The emission beam is collimated with the objective lens system 663, whereafter the beam transmits the dichroic mirror 651, and is reflected by the next dichroic mirror 652. Mirrors 651 and 652 may alternatively be of other type, based on e.g. 50% / 50% separation or polarization. The emission beam is then filtered with a selectable filter 694 and focused to the sensor surface of the image detector. The image detector is preferably a charge coupled device, CCD.

It is possible to measure details of each sample separately with the image detector. However, it is alternatively possible to make the measurement of details from two or large number of adjacent samples simultaneously with the image detector. In this case, it is required to design the optical components for a wider optical beam, and to use an image detector with higher resolution.

The optical components such as the mirrors 651 and 652, filter 694 and lenses 692, 693 and 695 can be changeable, and they may be included in a changeable optical module. In Figure 6 the top measurement head comprises a carousel wheel 628 for the attachment of optical modules 640a, 640b,... The wheel can be rotated around its fixing point 329, and the optical module used in a measurement can thus be selected by controlling the position of the wheel. The bottom measurement head may thus also comprise a similar optical module including the mirrors 651 and 652, and optionally other optical components 692-695.

The instrument is also equipped with electronics for amplifying and processing the signals from the detectors, as well as electronics for driving the lamp(s). There is also control electronics provided for controlling the measurements, such as selecting filter(s), selecting the optical module(s), controlling optical switch(es), controlling the position of the sample tray 689, and controlling the positions of the measurement heads 620 and 660 relative to the sample platform 680. The electronics also includes processing means processing the image data received from the image sensor in order to obtain measurement results relating to the details of the sample. The main electronics is not shown in Figure 6, as the required electronics can be designed by a skilled person in the art using the teachings of the present invention.

The detectors and light sources including their electronics are shown reduced in size compared to other components in Figure 6. On the other hand, the optical components are shown relatively enlarged in Figure 6 in order to better illustrate the optical paths in the instrument.

Next an example of a measurement method according to the invention is described referring to Figure 7. First the type of the measurement is determined/selected in steps 70 and 71. If the substance to be measured is homogeneously distributed within the sample volume, a point detector is selected for the measurement, 76. An imaging detector is selected for the measurement, 72, if the substance to be measured is located within details, such as cells or particles. It is also possible to make both types of measurements simultaneously or successively, if necessary.

When a point detector measurement is performed, 71, a light source and suitable excitation and emission filters are next selected, 77, according to the excitation and emission wavelengths of the measurement. However, if chemiluminescence measurement is performed, no illumination source or excitation filter is required. After selecting those components the optical measurement is performed by transmitting an excitation light pulse to the sample (not in chemiluminescence measurement) and measuring the emission radiation received to the point detector, 84. The concentration of the measured substance can then be determined on the basis of the intensity of the signal outputted from the point detector.

When an image detector measurement is performed, 72, a light source as well as suitable excitation and emission filters are next selected, 73, according to the excitation and emission wavelengths of the measurement. Then the optical measurement is performed by transmitting an excitation light pulse to the sample and measuring the emission radiation received to the image detector, 74. However, if chemiluminescence measurement is performed, selection or use of illumination source and excitation filters is not necessary. Finally, concentration of the measured substance in details of the sample is determined based on the data outputted from the image detector, 75. This last step of determining the substance concentration on the basis of the image detector signal is shown in more detail in Figure 8.

Figure 8 shows an exemplary method for determining concentration of substance within details, such as cells or other particles. When the emission radiation has been received with the image detector, the detector signals corresponding to the received radiation intensity for each pixel are acquired. This pixel data corresponds to a projection image of the measurement volume, 81. In order to distinguish the details from the background intensity level it may be necessary to perform image correction, 82. The image intensity may vary due to spatial variation of excitation illumination within the measurement volume, or due to spatial aberrations in the receiving optics. The image correction can be performed e.g. by obtaining a reference image from a standard sample and using the reference image for obtaining the necessary image correction parameters.

The location of details within the measurement volume is next determined, 83. The location of details can be determined e.g. by comparing the intensity data from each pixel with the background signal intensity. When the data value of a pixel is higher than the background value by a predetermined amount, the pixel can be regarded as having received emission from a detail. It is then, using the location information of these pixels, possible to identify the location and size of the details within the measurement volume of the sample. The background signal level can be determined based on the lowest data values of the image pixels.

Next the intensity data values are determined from the pixels which are regarded as having received emission radiation from sample details, 84. The total intensity of these pixels can then be divided e.g. by the number of concerned pixels or the number of identified cells. Thus a value is achieved, which corresponds to the concentration of the emitting substance of the details, such as cells or other particles, 85.

Figure 9 shows an exemplary image achieved with a measurement according to the present invention. The measured sample includes cells, and the measurement has been a GFP measurement. The emission received from the cells can be seen as bright spots. It is also apparent that most of the image area does not include emission from the cells and thus the signal from most pixels can be neglected in this measurement. The improvement of the measurement accuracy is thus obvious.

In this patent specification the structure of the components in an optical measurement instrument is not described in more detail as they can be implemented using the description above and the general knowledge of a person skilled in the art.

An optical instrument includes control means for performing the optical measurement process. The control of the measuring process in an optical measurement instrument generally takes place in an arrangement of processing capacity in the form of microprocessor(s) and memory in the form of memory circuits. Such arrangements are known as such from the technology of analyzers and relating equipment. To convert a known optical instrument into equipment according to the invention it may be necessary, in addition to the hardware modifications, to store into the memory means a set of machine-readable instructions that instruct the microprocessor(s) to perform the operations described above. Composing and storing into memory of such instructions involves known technology which, when combined with the teachings of this patent application, is within the capabilities of a person skilled in the art.

Above, an embodiment of the solution according to the invention has been described. The principle according to the invention can naturally be modified within the frame of the scope defined by the claims, for example, by modification of the details of the implementation and ranges of use.

For example, the measurements with a point detector and measurements with an image detector can be made from the same samples, simultaneously or successively, or the different types of measurements can be made from different sets of samples.

It is also possible to make either measurements concerning the contents of a substance in a sample or properties of a sample based on the signals received from the point and/or image detectors. It is also possible that contents of a substance in a sample is measured with one of the detectors and a property of a same or other sample is measured with other one of the detectors.

Although the invention is described with an arrangement where the light source and the detector for the detail imaging function are located on the bottom measurement head, there is no reason why their location on the top measurement head should not work. It is also possible to use illumination from above and detection from below the sample or vice versa.

Also, although the invention has been described with reference to the various microtitration plates it is equally applicable to any form of sample matrixes.

## Claims

1. An optical measurement instrument for measuring samples, comprising
- an illumination source (511) for excitation or activation of a sample (581),
- a point detector (531) for measuring emission radiation in a first measurement mode, wherein the point detector outputs a signal corresponding to the radiation received within the whole sensor area of the point detector, and
- means (563, 551, 552, 534, 535) for projecting emission radiation from a first measurement volume of a sample to the point detector,
wherein the point detector outputs a signal which corresponds to intensity of the emission radiation received from the whole first measurement volume,
**characterized in that** the instrument further comprises
- an image detector (591) for measuring emission radiation in a second measurement mode, wherein a sensor area of the image detector includes a multitude of sensor pixels for providing signals which correspond to the radiation received by said sensor pixels, and
- means (563, 551, 552, 594, 595) for projecting emission radiation from a second measurement volume of a sample to the sensor area of the image detector,
wherein the image detector (591) outputs a signal including information on intensity and spatial distribution of the emission radiation received from details within the second measurement volume of a sample.

2. An instrument according to claim 1, **characterized in that** it comprises means for providing an image based on the radiation intensities received in each pixel of the image detector, means for determining locations of details to be measured within the image and means for determining the signal intensities received from the located details.

3. An instrument according to claim 2, **characterized in that** it comprises means for determining a background intensity of the image on the basis of lowest signal levels from the pixels, means for comparing the signal level of pixels with the background level, and means for determining on the basis of said comparison whether the pixel signal includes signal from a detail to be measured.

4. An instrument according to claim 2, **characterized in that** it comprises means for determining the signal intensities for each of the located detail.

5. An instrument according to claim 2, **characterized in that** it comprises means for determining the total signal intensity for all located details.

6. An instrument according to claim 2, **characterized in that** the means for determining the intensity of the signal received from the details is adapted to disregard pixels, the measured volume of which does not include an emitting detail.

7. An instrument according to claim 2, **characterized in that** it comprises means for determining the number of emitting particles within the measured sample volume on the basis of the image.

8. An instrument according to claim 7, **characterized in that** it comprises means for obtaining the value of the total measured signal intensity received from the emitting details and dividing said value with the determined number of emitting details to achieve the average signal intensity received from a detail.

9. An instrument according to claim 2, **characterized in that** it comprises means for obtaining the value of the total measured signal intensity received from the emitting details and dividing said value with the number of pixels which have received radiation from pixels to achieve the average signal intensity received from a pixel having received radiation from a detail.

10. An instrument according to claim 1, **characterized in that** it comprises means for measuring the signal intensity separately for a pixel of the image detector and means for determining on the basis of the measured signal intensity whether the pixel has received emission from a detail of a sample.

11. An instrument according to claim 1, **characterized in that** it comprises means for determining groups of adjacent pixels of the image detector, means for measuring the signal intensity separately for a group of adjacent pixels, and means for determining on the basis of the measured signal intensity whether the part of the sample volume corresponding to the group of adjacent pixels includes at least part of an emitting detail.

12. An instrument according to claim 10 or 11, **characterized in that** it comprises means for measuring the signal intensity separately for all pixels or all groups of pixels within the measured volume of the sample, and means for determining on the basis of the measured signal intensities whether the measured sample volumes within each pixel or each group of pixels include at least part of an emitting detail.

13. An instrument according to any of claims 10-12, **characterized in that** it comprises means for the means for determining the intensity of the signal received from the details, said means being adapted to disregard pixels, the measured volume of which does not include an emitting detail.

14. An instrument according to claim 1, **characterized in that** the instrument comprises means for measuring with the point detector and with the image detector at least in part simultaneously.

15. An instrument according to claim 1, **characterized in that** the instrument comprises means for said measuring with the point detector and with the image detector at least in part simultaneously from a same sample.

16. An instrument according to claim 1, **characterized in that** the instrument comprises means for said measuring with the point detector and with the image detector one sample at a time.

17. An instrument according to claim 1, **characterized in that** the instrument comprises means for said measuring with the image detector simultaneously two or larger number of adjacent samples.

18. An instrument according to claim 1, **characterized in that** the detail is a biologic cell.

19. An instrument according to claim 1, **characterized in that** said details to be measured are settled at the bottom of a sample well and the measurement volume is located at the bottom part of the sample.

20. An instrument according to claim 1, **characterized in that** the volume of said detail is less than 1/1000, preferably less than 1/10000, of the second measurement volume.

21. An instrument according to claim 1, **characterized in that** the diameter of said detail is between 1-100 µm.

22. An instrument according to claim 1, **characterized in that** the number of pixels in the image detector is higher than, preferably at least ten-fold higher than the number of details to be measured within the second measurement volume of the sample.

23. An instrument according to claim 1, **characterized in that** the image detector is a charge coupled device, CCD.

24. An instrument according to claim 1, **characterized in that** the point detector is a photomultiplier tube, PMT.

25. An instrument according to claim 1, **characterized in that** the point detector and the image detector are located in a same measurement head.

26. An instrument according to claim 1, **characterized in that** the instrument comprises a beam splitter mirror for separating the emission beams into first and second beams, a first beam received from a homogeneous substance directed to the point detector and a second beam received from details of a substance directed to the image detector.

27. An instrument according to claim 1, **characterized in that** the instrument comprises a dichroic mirror for separating the emission beams into first and second beams on the basis of the wavelength of the beams, a first beam received from a homogeneous substance directed to the point detector and a second beam received from details of a substance directed to the image detector.

28. An instrument according to claim 1, **characterized in that** said first measurement and said second measurement volume are at least in part different in location and/or size within a sample.

29. An instrument according to claim 28, **characterized in that** the centre of the second measurement volume has a lower location within a sample than the centre of the first measurement volume.

30. An instrument according to claim 1, **characterized in that** it comprises a first illumination source for the excitation/activation of a sample within the first measurement volume in the first measurement mode, and a second illumination source, different from the first illumination source, for the excitation/activation of a sample within the second measurement volume in the second measurement mode.

31. An instrument according to claim 1, **characterized in that** the instrument comprises means for performing photoluminescence measurement, amplified luminescent proximity homogeneous assay measurement or a chemiluminescence measurement from samples.

32. An instrument according to claim 1, **characterized in that** it further comprises means for photometric measurement of samples.

33. An instrument according to claim 1, **characterized in that** it comprises
- means for measuring contents of a first substance in a first sample or part of a first sample based on a signal received from the point detector, and
- means for measuring contents of a second substance in a second sample or part of a second sample based on a signal received from the image detector,
wherein the second substance may be the same as or different from the first substance and the second sample may be the same as or different from the first sample.

34. An instrument according to claim 1, **characterized in that** it comprises
- means for measuring a first property of a first sample or part of a first sample based on a signal received from the point detector, and
- means for measuring a second property of a second sample or part of a second sample based on a signal received from the image detector,
wherein the second property may be the same as or different from the first property and the second sample may be the same as or different from the first sample.

35. An instrument according to claim 1, **characterized in that** it comprises means for measuring samples which are located in wells of a microtitration plate.

36. A method for optical measurement of samples with an optical measurement instrument, the method comprising a selectable first measurement mode (76-79),
wherein
- emission radiation is projected from a first measurement volume of a sample to a point detector of the instrument, and
- emission radiation is measured with a point detector of the instrument, wherein the point detector outputs a signal corresponding to the radiation received within the whole sensor area of the point detector,
wherein the point detector outputs a signal which corresponds to intensity of the emission radiation received from the whole first measurement volume,
**characterized in that** the method further comprises a selectable second measurement mode (72-75), wherein
- emission radiation is projected from a second measurement volume of a sample to the sensor area of an image detector,
- emission radiation is measured with the image detector, wherein a multitude of sensor pixels of the image detector provide signals which correspond to the radiation received by said sensor pixels, and
wherein the image detector outputs a signal including information on intensity and spatial distribution of the emission radiation received from details within the second measurement volume of a sample.

37. A method according to claim 36, **characterized in that** before measuring the emission radiation from a sample radiation is projected to the sample for exciting or activating the sample.

38. A method according to claim 36, **characterized in that** the second measurement mode further comprises forming an image on the basis of the radiation intensities received in each pixel of the image detector, determining locations of details to be measured within the image and determining signal intensities received from the located details.

39. A method according to claim 38, **characterized in that** it comprises determining a background intensity of the image on the basis of lowest signal levels from the pixels, comparing the signal level of pixels with the background level, and determining on the basis of said comparison whether the pixel signal includes signal from a detail to be measured.

40. A method according to claim 38, **characterized in that** it comprises determining the signal intensities for each of the located detail.

41. A method according to claim 38, **characterized in that** it comprises determining the total signal intensity for all located details.

42. A method according to claim 38, **characterized in that** determining the intensity of the signal received from the details includes disregarding pixels, the measured volume of which does not include an emitting detail.

43. A method according to claim 38, **characterized in that** it comprises determining the number of emitting particles within the measured sample volume on the basis of the image.

44. A method according to claim 43, **characterized in that** it comprises obtaining the value of the total measured signal intensity received from the emitting details and dividing said value with the determined number of emitting details to achieve the average signal intensity received from a detail.

45. A method according to claim 38, **characterized in that** it comprises means for obtaining the value of the total measured signal intensity received from the emitting details and dividing said value with the number of pixels which have received radiation from pixels to achieve the average signal intensity received from a pixel having received radiation from a detail.

46. A method according to claim 36, **characterized in that** it comprises measuring the signal intensity separately for a pixel of the image detector and determining on the basis of the measured signal intensity whether the pixel has received emission from a detail of a sample.

47. A method according to claim 36, **characterized in that** it comprises for determining groups of adjacent pixels of the image detector, measuring the signal intensity separately for a group of adjacent pixels, and determining on the basis of the measured signal intensity whether the part of the sample volume corresponding to the group of adjacent pixels includes at least part of an emitting detail.

48. A method according to claim 46 or 47, **characterized in that** it comprises measuring the signal intensity separately for all pixels or all groups of pixels within the measured volume of the sample, and determining on the basis of the measured signal intensities whether the measured sample volumes within each pixel or each group of pixels include at least part of an emitting detail.

49. A method according to any of claims 46-48, **characterized in that** it comprises determining the intensity of the signal received from the details, including disregarding pixels, the measured volume of which do not include an emitting detail.

50. A method according to claim 36, **characterized in that** the first measurement mode and the second measurement mode are performed at least in part simultaneously.

51. A method according to claim 36, **characterized in that** the first measurement mode and the second measurement mode are performed at least in part simultaneously from a same sample.

52. A method according to claim 36, **characterized in that** it comprises measuring each sample separately.

53. A method according to claim 36, **characterized in that** in the second measurement mode it comprises measuring with the image detector simultaneously two or larger number of adjacent samples.

54. A method according to claim 36, **characterized in that** the detail is a biologic cell.

55. A method according to claim 36, **characterized in that** said details to be measured are settled at the bottom of a sample well and the second measurement volume is located at the bottom part of the sample.

56. A method according to claim 36, **characterized in that** the first measurement volume and the second measurement volume are at least in part different in their location and/or size within the sample.

57. A method according to claim 55, **characterized in that** the centre of the second measurement volume has a lower location within a sample than the centre of the first measurement volume.

58. A method according to claim 36, **characterized in that** in the first measurement mode the first measurement volume within a sample is excited/activated with radiation received from a first illumination source, and in the second measurement mode the second measurement volume within a sample is excited/activated with radiation received from a second illumination source, different from the first illumination source.

59. A method according to claim 36, **characterized in that** the measurement is a photoluminescence measurement, amplified luminescent proximity homogeneous assay measurement or a chemiluminescence measurement.

60. A method according to claim 36, **characterized in that** it comprises
- measuring contents of a first substance in a first sample or part of a first sample based on a signal received from the point detector, and
- measuring contents of a second substance in a second sample or part of a second sample based on a signal received from the image detector,
wherein the second substance may be the same as or different from the first substance and the second sample may be the same as or different from the first sample.

61. A method according to claim 36, **characterized in that** it comprises
- measuring a first property of a first sample or part of a first sample based on a signal received from the point detector, and
- measuring a second property of a second sample or part of a second sample based on a signal received from the image detector,
wherein the second property may be the same as or different from the first property and the second sample may be the same as or different from the first sample.

62. A method according to claim 36, **characterized in that** it comprises means for measuring samples which are located in wells of a microtitration plate.
